# EUROPÄISCHE PATENTSCHRIFT

(11) **EP 1 342 841 B1**
(45) Veröffentlichungstag und Bekanntmachung des Hinweises auf die Patenterteilung: **14.06.2006**
(21) Anmeldenummer: 03002921.9
(22) Anmeldetag: 10.02.2003
(51) Int. Cl.: D21G 1/02, F16C 13/00

(54) **Walzenanordnung**
Roll arrangement
Agencement de rouleaux

(30) Priorität: 08.03.2002 DE 10210357
(43) Veröffentlichungstag der Anmeldung: 10.09.2003
(73) Patentinhaber: Voith Paper Patent GmbH, 89522 Heidenheim (DE)
(72) Erfinder: Schnyder, Eugen, 5622 Waltenschwil (CH); Hinz, Joachim, 47906 Kempen (DE); Cramer, Dirk, 48259 Duisburg (DE)
(74) Vertreter: Manitz, Finsterwald & Partner GbR

(56) Entgegenhaltungen:
- EP-A- 0 328 502
- DE-A- 19 704 146

## Beschreibung

Die Erfindung betrifft eine Walzenanordnung mit wenigstens einem Nip, der zwischen einer insbesondere selbstanstellenden Durchbiegungseinstellwalze und einer Gegenwalze gebildet ist, wobei die Durchbiegungseinstellwalze einen umlaufenden Walzenmantel, ein den Walzenmantel axial durchsetzendes drehfestes Joch sowie zwischen dem Walzenmantel und dem Joch angeordnete, an den Walzenmantel an legbare Stutzelemente umfasst und die nipseitigen Stützelemente der Durchbiegungseinstellwalze zumindest teilweise so ausgebildet sind, dass sie eine vom Walzenmantel zurückgezogene Position einnehmen Können. Eine Walzenanordnung dieser Art ist aus der EP 0 328 502 A bekannt.

Durchbiegungseinstellwalzen, insbesondere selbstanstellende Durchbiegungseinstellwalzen werden unter anderem in Mehrwalzenkalandern verwendet, in denen derzeit Getriebe eingesetzt werden, die infolge der Getriebeverzahnung Schwingungsprobleme mit sich bringen und überdies relativ viel Platz benötigen. Angesichts der heutigen Geschwindigkeiten, die deutlich höher liegen als früher, treten die genannten Schwingungsprobleme in verstärktem Maße auf. Durch die Getriebe ergibt sich auch ein höheres Walzengewicht, das durch außen liegende Stützquellen kompensiert werden muss. Außen liegende Stützquellen bringen nun aber ebenso wie beispielsweise der durch die Getriebe bedingt höhere Platzbedarf eine Vergrößerung des Lagerabstandmaßes mit sich. Schließlich sind die Getriebe relativ teuer.

Ziel der Erfindung ist es, eine verbesserte Walzenanordnung der eingangs genannten Art zu schaffen, mit denen die zuvor genannten Probleme beseitigt sind.

Diese Aufgabe wird erfindungsgemäß dadurch gelöst, dass die Walzenanordnung eine Stener - und/oder Regeleinrichtung umfasst, über die die nipseitigen Stützelemente der Durchbiegungseinstellwalze so ansteuerbar sind, dass zumindest ein Teil davon während des bei offenem Nip stattfindenden Anfahrbetriebs der Durchbiegungseinstellwalze eine vom Walzenmantel zurückgezogene Position einnimmt.

Nachdem während des Anfahrbetriebs, bei dem die Durchbiegungseinstellwalze entsprechend beschleunigt werden muss, zumindest ein Teil der nipseitigen Stützelemente vom Walzenmantel zurückgezogen ist, d.h. mit diesem nicht mehr im Wirkeingriff steht, wird die beim Anfahren der Durchbiegungseinstellwalze erforderliche Antriebsleistung entsprechend reduziert, so dass die betreffende Antriebsleistung z.B. auch durch einen schwingungsdämpfenden Hilfsantrieb aufgebracht werden kann, der nur für eine entsprechend geringere Leistung ausgelegt sein muss. So wird infolge der zurückgezogenen Stützelemente unter anderem die Reib- und Planschleistung wesentlich reduziert. Die zurückgezogenen Stützelemente stellen für die umlaufende Ölschicht praktisch kein nennenswertes Hindernis mehr dar. Es kann also insbesondere auch kein Öl mehr gegen die Stützelemente schlagen, wodurch der Walzenmantel bisher stark abgebremst wurde. Nach einem erfolgten Schließen des Nips kann die zusätzlich erforderliche Leistung insbesondere über die Gegenwalze aufgebracht werden. Es muss also nicht in jedem Fall die ganze Leistung über den genannten Hilfsantrieb aufgebracht werden.

Vorzugsweise ist daher zumindest der Durchbiegungseinstellwalze ein schwingungsdämpfender Hilfsantrieb zugeordnet. Bei diesem kann es sich lediglich beispielsweise um einen Riemenantrieb handeln. Grundsätzlich können jedoch auch andere schwingungsdämpfende Antriebe eingesetzt werden.

Vorteilhafterweise nimmt während des Anfahrbetriebs der größte Teil der nipseitigen Stützelemente eine vom Walzenmantel zurückgezogene Position ein.

Bei einer bevorzugten praktischen Ausführungsform der erfindungsgemäßen Walzenanordnung nehmen während des Anfahrbetriebs alle nipseitigen Stützelemente jeweils eine vom Walzenmantel zurückgezogene Position ein, wodurch die beim Anfahren erforderliche Antriebsleistung auf ein Minimum reduziert wird.

Die während des Anfahrbetriebs vom Walzenmantel zurückgezogenen nipseitigen Stützelemente sind zweckmäßigerweise bei Erreichen der Betriebsgeschwindigkeit und/oder beim Schleißen des Nips an den Walzenmantel anlegbar.

Bei einer bevorzugten praktischen Ausführungsform der erfindungsgemäßen Walzenanordnung sind die betreffenden nipseitigen Stützelemente federnd in ihre zurückgezogene Position belastet. Vorzugsweise sind die betreffenden nipseitigen Stützelemente jeweils durch eine konische Feder in ihre zurückgezogene Position belastet. Dabei nimmt die konische Feder im belasteten Zustand zweckmäßigerweise die Form einer zumindest im wesentlichen flachen Spirale an, um eine möglichst hohe Komprimierung zu erzielen und das betreffende Stützelement möglichst weit vom Mantel zurückzuziehen.

Bei einer zweckmäßigen praktischen Ausführungsform der Erfindung ist die ein jeweiliges nipseitiges Stützelement in die zurückgezogene Position belastende Feder innerhalb des Stützelements angeordnet und vorzugsweise an einem Anschlag abgestützt, der an einem Ende eines sich in das Stützelement erstreckenden Bolzens oder dergleichen angeordnet ist, der mit seinem anderen Ende am Joch fixiert ist.

Von Vorteil ist insbesondere auch, wenn die Öltemperatur so ansteuerbar ist, dass sie während des Anfahrbetriebs höher ist als danach.

Gemäß einer weiteren vorteilhaften Ausführungsform ist der Volumenstrom des Öls in Abhängigkeit davon veränderbar, ob sich die Durchbiegungseinstellwalze im Anfahrbetrieb befindet oder nicht.

Die nipseitigen Stützelemente sind insbesondere durch Druckbeaufschlagung an den Walzenmantel anlegbar. Es kann sich also insbesondere um hydraulische Stützelemente handeln. Die Stützelemente können hydrodynamisch und/oder hydrostatisch geschmiert sein.

Während des Anfahrbetriebs sind zweckmäßigerweise zumindest die ihre zurückgezogene Position einnehmenden Stützelemente drucklos.

Die Walzenanordnung kann insbesondere als Mehrwalzenkalander ausgeführt sein. Die Erfindung ist also insbesondere bei einem solchen Mehrwalzenkalander anwendbar.

Die Erfindung wird im folgenden anhand eines Ausführungsbeispiels unter Bezugnahme auf die Zeichnung näher erläutert; in dieser zeigen:
- Figur 1: eine schematische, teilweise geschnittene Darstellung einer Walzenanordnung mit einem zwischen einer selbstanstellenden Durchbiegungseinstellwalze und einer Gegenwalze gebildeten Nip, wobei sich die Durchbiegungseinstellwalze in dem bei offenem Nip stattfindenden Anfahrbetrieb befindet,
- Figur 2: die Walzenanordnung gemäß Figur 1 bei geschlossenem Nip und
- Figur 3: in der rechten Hälfte eine vergrößerte Darstellung eines Teilbereichs "A" der Durchbiegungseinstellwalze gemäß Figur 1 und in der linken Hälfte eine vergrößerte Darstellung eines entsprechenden Teilbereichs "B" der Durchbiegungseinstellwalze gemäß Figur 2 mit einem seine zurückgezogene Position einnehmenden Stützelement bzw. mit einem an den Walzenmantel angelegten Stützelement.

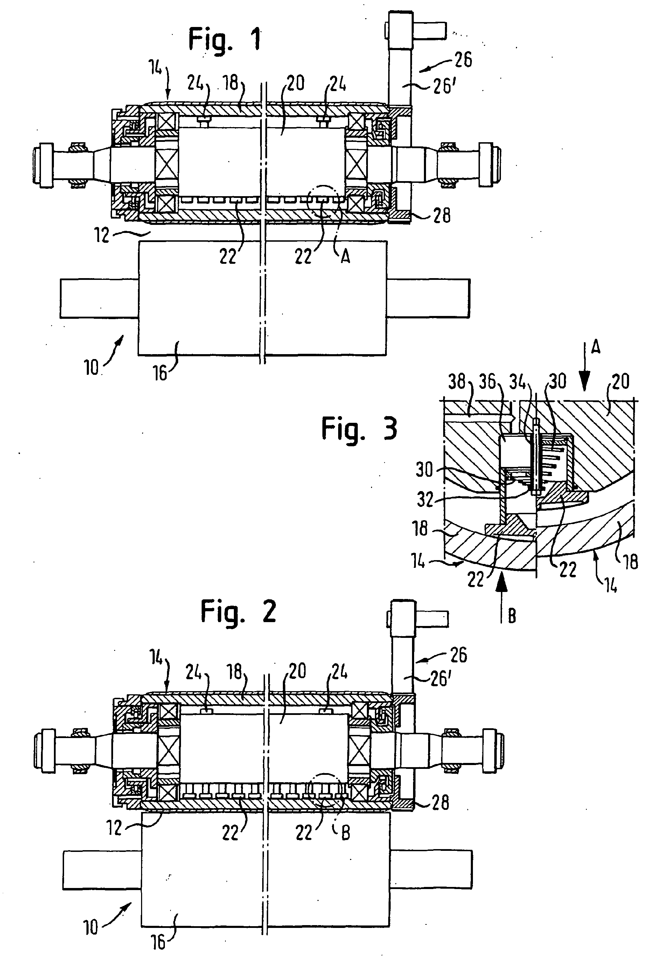

Die Figuren 1 bis 3 zeigen in rein schematischer Darstellung eine beispielhafte Ausführungsform einer Walzenanordnung 10 mit einem Nip oder Walzenspalt 12, der zwischen einer selbstanstellenden Durchbiegungseinstellwalze 14 und einer Gegenwalze 16 gebildet ist.

Die selbstanstellende Durchbiegungseinstellwalze 14 umfasst einen umlaufenden Walzenmantel 18, ein den Walzenmantel 18 axial durchsetzendes drehfesten Joch 20, zwischen dem Walzenmantel 18 und dem Joch 20 angeordnete nipseitige Stützelemente 22 sowie auf der anderen Seite des Jochs 20 vorgesehene Gegenelemente 24.

Wie anhand der Figuren 1 und 2 zu erkennen ist, wird die Durchbiegungseinstellwalze 14 über einen schwingungsdämpfenden Hilfsantrieb, im vorliegenden Fall z.B. einen Riemenantrieb 26 angetrieben, der beispielsweise einen Zahnriemen 26' umfassen kann, der mit einem am Walzenmantel 18 vorgesehenen Zahnkranz 48 zusammenwirkt.

Die nipseitigen Stützelemente 22 der Durchbiegungseinstellwalze 14 sind insbesondere über eine entsprechende Steuer- und/oder Regeleinrichtung so ansteuerbar, dass zumindest ein Teil davon während des bei offenem Nip 12 stattfindenden Anfahrbetriebs der Durchbiegungseinstellwalze, bei dem diese entsprechend beschleunigt wird, eine vom Walzenmantel 18 zurückgezogene Position einnimmt (vgl. Figur 1 sowie den in der rechten Hälfte der Figur 3 vergrößert wiedergegebenen Teilbereich "A"). Im vorliegenden Fall nehmen während des Anfahrbetriebs alle nipseitigen Stützelemente 22 jeweils eine vom Walzenmantel 18 zurückgezogene Position ein.

Die Gegenelemente 24 liegen am Walzenmantel 18 an. Durch diese Gegenelemente 24 wurde der Walzenmantel 18 relativ zum Joch 20 zum Öffnen des Nips 12 von der Gegenwalze 16 wegbewegt. Im vorliegenden Fall wird die oben liegende Durchbiegungseinstellwalze 14 durch diese Gegenelemente 24 zum Öffnen des Nips 12 angehoben und in der dargestellten oberen Position im Abstand zur Gegenwalze 16 abgestützt.

Die während des Anfahrbetriebs vom Walzenmantel 18 zurückgezogenen nipseitigen Stützelemente 22 werden bei Erreichen der Betriebsgeschwindigkeit und/oder beim Schließen des Nips 12 an den Walzenmantel 18 angelegt. Dazu werden die nipseitigen Stützelemente 22 entsprechend mit Druck beaufschlagt. Wie insbesondere anhand der Figur 3 zu erkennen ist, sind im vorliegenden Fall hydrostatische Stützelemente 22 vorgesehen. Sie können hydrodynamisch und/oder hydrostatisch geschmiert sein.

Anhand der Figur 3 ist auch zu erkennen, dass die nipseitigen Stützelemente 22 jeweils federnd in ihre zurückgezogene Position belastet sind. Dazu können diese Stützelemente 22 insbesondere jeweils durch eine konische Feder beaufschlagt sein. Wie anhand der Darstellung in der linken Hälfte der Figur 3 zu erkennen ist, besitzt die konische Feder 30 im belasteten Zustand die Form einer zumindest im wesentlichen flachen Spirale, um eine möglichst hohe Komprimierung zu erzielen und somit das betreffende Stützelement 22 möglichst weit vom Walzenmantel 18 zurückzuziehen.

Im vorliegenden Fall ist die Feder 30 innerhalb des betreffenden Stützelements 22 angeordnet und z. B. an einem Anschlag 32 abgestützt, der an einem Ende eines sich in das Stützelement 22 erstreckenden Bolzens 34 oder dergleichen angeordnet ist, der mit seinem anderen Ende am Joch 20 fixiert ist (vgl. Figur 3). Die konische Feder 30 ist auf den Bolzen 34 aufgeschoben und stützt sich mit ihrem schmaleren oder spitzen Ende an dem Anschlag 32 ab. Mit ihrem gegenüberliegenden breiteren Ende ist die konische Feder 30 z.B. am Boden des Stützelements 22 abgestützt.

Gemäß Figur 3 liegt das kolbenartige Stützelement 22 in der zurückgezogenen Position weitgehend innerhalb eines im Joch 20 ausgebildeten Zylinderraums 36. Bei einer entsprechenden Druckbeaufschlagung wird das kolbenartige Stützelement 22 bis zur Anlage an der Innenseite des Walzenmantels 18 entgegen der Federkraft ausgefahren. Die entsprechende Druckbeaufschlagung erfolgt über eine in den Zylinderraum 36 mündende Leitung 38. Wird das Stützelement 22 wieder drucklos geschaltet, so wird es durch die konische Feder 30 wieder in die in der rechten Hälfte der Figur 3 dargestellte zurückgezogene Position bewegt.

Die nipseitigen Stützelemente 22 werden im vorliegenden Fall also durch entsprechende Druckbeaufschlagung entgegen der Kraft der jeweiligen Feder 30 an den Walzenmantel 18 angelegt, während sie im Anfahrbetrieb drucklos sind und entsprechend durch die Federn 30 in ihrer zurückgezogenen Position gehalten werden.

Eine entsprechende Walzenanordnung kann insbesondere in einem Mehrwalzenkalander vorgesehen sein.

In der Figur 1 befindet sich die Durchbiegungseinstellwalze 14 in dem bei offenem Nip 12 stattfindenden Anfahrbetrieb, in dem sie entsprechend beschleunigt wird. Die nipseitigen Stützelemente 22 nehmen jeweils ihre zurückgezogene Position ein (vgl. auch den rechten Teil der Figur 3). Die Stützelemente 22 sind also drucklos und entsprechend durch die konischen Federn 30 in der zurückgezogenen Position gehalten. Insbesondere bei Erreichen der Betriebsgeschwindigkeit und/oder beim Schließen des Nips 12 werden die Stützelemente 22 mit Druck beaufschlagt und entgegen der Kraft der Federn 30 an die Innenseite des Walzenmantels 18 angelegt (vgl. Figur 2 sowie die linke Hälfte der Figur 3). Wie anhand der Figur 2 zu erkennen ist, sind die Gegenelemente 24 während des Anfahrbetriebs vom Walzenmantel 18 zurückgezogen

Zusätzlich ist es auch denkbar, die Öltemperatur so zu steuern bzw. zu regeln, dass sie während des Anfahrbetriebs höher ist als danach. Es ist beispielsweise auch denkbar, den Volumenstrom des Öls in Abhängigkeit davon zu verändern, ob sich die Durchbiegungseinstellwalze 14 im Anfahrbetrieb befindet oder nicht.

Anhand des folgenden Beispiels wird eine mögliche Reduzierung der beim Anfahren der Durchbiegungseinstellwalze 14 erforderlichen Antriebsleistung aufgezeigt:

Bei einer Durchbiegungseinstellwalze mit einem Durchmesser von beispielsweise 1100 mm, einer Länge von z.B. 10 m, mit beispielsweise 48 Stützelementen mit einem Durchmesser von jeweils 150 mm und bei einer Geschwindigkeit von beispielsweise 1800 m/min wird eine Antriebsleistung von beispielsweise etwa 850 kW benötigt.

Mit einem Zurückziehen der nipseitigen Stützelemente entfällt eine aufzubringende Reibleistung zwischen den Stützelementen und dem Walzenmantel von etwa 240 kW. Überdies wird die Planschleistung (gegen die Stützelemente schlagendes umlaufendes Öl in der Walze) um beispielsweise etwa 20 % von 580 kW auf z.B. 460 kW reduziert, so dass man insgesamt mit der Lagerreibung unterhalb von 500 kW bleibt.

### Bezugszeichenliste

- 10: Walzenanordnung
- 12: Nip, Walzenspalt
- 14: Durchbiegungseinstellwalze
- 16: Gegenwalze
- 18: Walzenmantel
- 20: Joch
- 22: nipseitiges Stützelement
- 24: Gegenelement
- 26: schwingungsdämpfender Hilfsantrieb, Riemenantrieb
- 26': Zahnriemen
- 28: Zahnkranz
- 30: konische Feder
- 32: Anschlag
- 34: Bolzen
- 36: Zylinderraum
- 38: Leitung

## Patentansprüche

1. Walzenanordnung (10) mit wenigstens einem Nip (12), der zwischen einer insbesondere selbstanstellenden Durchbiegungseinstellwalze (14) und einer Gegenwalze (16) gebildet ist, wobei die Durchbiegungseinstellwalze (14) einen umlaufenden Walzenmantel (18), ein den Walzenmantel (18) axial durchsetzendes drehfestes Joch (20) sowie zwischen dem Walzenmantel (18) und dem Joch (20) angeordnete, an den Walzenmantel (18) anlegbare Stützelemente (22) umfasst und die nipseitigen Stützelemente (22) der Durchbiegungseinstellwalze (14) zumindest teilweise so ausgebildet sind, dass sie eine vom Walzenmantel (18) zurückgezogene Position einnehmen können,
**dadurch gekennzeichnet,**
**dass** sie eine Steuer- und/oder Regeleinrichtung umfasst, über die die nipseitigen Stützelemente (22) der Durchbiegungseinstellwalze (14) so ansteuerbar sind, dass zumindest ein Teil davon während des bei offenem Nip (12) stattfindenden Anfahrbetriebs der Durchbiegungseinstellwalze (14) eine vom Walzenmantel (18) zurückgezogene Position einnimmt.

2. Walzenanordnung nach Anspruch 1,
**dadurch gekennzeichnet,**
**dass** zumindest der Durchbiegungseinstellwalze (14) ein schwingungsdämpfender Hilfsantrieb (26) zugeordnet ist.

3. Walzenanordnung nach Anspruch 2,
**dadurch gekennzeichnet,**
**dass** der schwingungsdämpfende Hilfsantrieb einen Riemenantrieb (26) umfasst.

4. Walzenanordnung nach einem der vorhergehenden Ansprüche,
**dadurch gekennzeichnet,**
**dass** während des Anfahrbetriebs der größte Teil der nipseitigen Stützelemente (22) eine vom Walzenmantel (18) zurückgezogene Position einnimmt.

5. Walzenanordnung nach einem der vorhergehenden Ansprüche,
**dadurch gekennzeichnet,**
**dass** während des Anfahrbetriebs alle nipseitigen Stützelemente (22) jeweils eine vom Walzenmantel (18) zurückgezogene Position einnehmen.

6. Walzenanordnung nach einem der vorhergehenden Ansprüche,
**dadurch gekennzeichnet,**
**dass** die während des Anfahrbetriebs vom Walzenmantel (18) zurückgezogenen nipseitigen Stützelemente (22) bei Ereichen der Betriebsgeschwindigkeit an den Walzenmantel (18) anlegbar sind.

7. Walzenanordnung nach einem der vorhergehenden Ansprüche,
**dadurch gekennzeichnet,**
**dass** die während des Anfahrbetriebs vom Walzenmantel (18) zurückgezogenen nipseitigen Stützelemente (22) beim Schließen des Nips (12) an den Walzenmantel (18) anlegbar sind.

8. Walzenanordnung nach einem der vorhergehenden Ansprüche,
**dadurch gekennzeichnet,**
**dass** die betreffenden nipseitigen Stützelemente (22) federnd in ihre zurückgezogene Position belastet sind.

9. Walzenanordnung nach Anspruch 8,
**dadurch gekennzeichnet,**
**dass** die betreffenden nipseitigen Stützelemente (22) jeweils durch eine konische Feder (30) in ihre zurückgezogene Position belastet sind.

10. Walzenanordnung nach Anspruch 9,
**dadurch gekennzeichnet,**
**dass** die konische Feder (30) im belasteten Zustand die Form einer zumindest im Wesentlichen flachen Spirale besitzt.

11. Walzenanordnung nach Anspruch 9 oder 10,
**dadurch gekennzeichnet,**
**dass** die ein jeweiliges nipseitiges Stützelement (22) in die zurückgezogene Position belastende Feder (30) innerhalb des Stützelements (22) angeordnet und vorzugsweise an einem Anschlag (32) abgestützt ist, der an einem Ende eines sich in das Stützelement (22) erstreckenden Bolzens (34) oder dergleichen angeordnet ist, der mit seinem anderen Ende am Joch (20) fixiert ist.

12. Walzenanordnung nach einem der vorhergehenden Ansprüche,
**dadurch gekennzeichnet, dass** die nipseitigen Stützelement (22) hydraulische Stützelemente sind, die hydrodynamisch und/oder hydrostatisch geschmiert sind, und
**dass** die Öltemperatur so steuerbar ist, dass sie während des Anfahrbetriebs höher ist als danach.

13. Walzenanordnung nach einem der vorhergehenden Ansprüche,
**dadurch gekennzeichnet, dass** die nipseitigen Stützelement (22) hydraulische Stützelemente sind, die hydrodynamisch und/oder hydrostatisch geschmiert sind, und
dass der Volumenstrom des Öls in Abhängigkeit davon veränderbar ist, ob sich die Durchbiegungseinstellwalze (14) im Anfahrbetrieb befindet oder nicht.

14. Walzenanordnung nach einem der vorhergehenden Ansprüche,
**dadurch gekennzeichnet,**
**dass** die nipseitigen Stützelemente (22) durch Druckbeaufschlagung an den Walzenmantel (18) anlegbar sind.

15. Walzenanordnung nach einem der vorhergehenden Ansprüche,
**dadurch gekennzeichnet,**
**dass** während des Anfahrbetriebs zumindest die ihre zurückgezogene Position einnehmenden Stützelemente (22) drucklos sind.

16. Walzenanordnung nach einem der vorhergehenden Ansprüche,
**dadurch gekennzeichnet,**
**dass** sie als Mehrwalzenkalander ausgeführt ist.

## Claims

1. A roll arrangement (10) comprising at least one nip (12) which is formed between a deflection controlled roll (14), in particular a self-adjusting deflection controlled roll, and a counter roll (16), wherein the deflection controlled roll (14) includes a peripheral roll jacket (18), a rotationally fixed carrier (20) axially passing through the roll jacket (18) as well as support elements (22) which are arranged between the roll jacket (18) and the carrier (20) and can be brought into contact with the roll jacket (18), and wherein at least some of the support elements (22) at the nip side of the deflection controlled roll (14) are made such that they can adopt a position retracted from the roll jacket (18),
**characterized in that** it includes a control and/or regulation device via which the support elements (22) at the nip side of the deflection controlled roll (14) can be controlled such that at least some of them adopt a position retracted from the roll jacket (18) on a start-up operation taking place with an open nip (12).

2. A roll arrangement in accordance with claim 1, **characterized in that** a vibration damped auxiliary drive (26) is associated with at least the deflection controlled roll (14).

3. A roll arrangement in accordance with claim 2, **characterized in that** the vibration damped auxiliary drive includes a belt drive (26).

4. A roll arrangement in accordance with any one of the preceding claims, **characterized in that** the larger part of the support elements (22) at the nip side adopts a position retracted from the roll jacket (18) during start-up operation.

5. A roll arrangement in accordance with any one of the preceding claims, **characterized in that** all support elements (22) at the nip side each adopt a position retracted from the roll jacket (18) during start-up operation.

6. A roll arrangement in accordance with any one of the preceding claims, **characterized in that** the support elements (22) at the nip side which are retracted from the roll jacket (18) during start-up operation can be brought into contact with the roll jacket (18) on reaching the operating speed.

7. A roll arrangement in accordance with any one of the preceding claims, **characterized in that** the support elements (22) at the nip side which are retracted from the roll jacket (18) during start-up operation can be brought into contact with the roll jacket (18) on the closing of the nip (12).

8. A roll arrangement in accordance with any one of the preceding claims, **characterized in that** the respective support elements (22) at the nip side are resiliently loaded into their retracted position.

9. A roll arrangement in accordance with claim 8, **characterized in that** the respective support elements (22) at the nip side are each loaded into their retracted position by a conical spring (30).

10. A roll arrangement in accordance with claim 9, **characterized in that** the conical spring (30) has the shape of an at least substantially flat spiral in the loaded state.

11. A roll arrangement in accordance with claim 9 or claim 10, **characterized in that** the spring (30) loading a respective support element (22) at the nip side into the retracted position is arranged inside the support element (22) and is preferably supported at an abutment (32) which is arranged at one end of a bolt (34) or the like which extends into the support element (22) and which is fixed to the carrier (20) at its other end.

12. A roll arrangement in accordance with any one of the preceding claims, **characterized in that** the support elements (22) on the nip side are hydraulic support elements which are hydrodynamically and/or hydrostatically lubricated; and **in that** the oil temperature can be controlled such that it is higher during start-up operation than thereafter.

13. A roll arrangement in accordance with any one of the preceding claims, **characterized in that** the support elements (22) on the nip side are hydraulic support elements which are hydrodynamically and/or hydrostatically lubricated; and **in that** the volume flow of the oil is changeable in dependence on whether or not the deflection controlled roll (14) is in start-up operation.

14. A roll arrangement in accordance with any one of the preceding claims, **characterized in that** the support elements (22) at the nip side can be brought into contact with the roll jacket (18) by pressure loading.

15. A roll arrangement in accordance with any one of the preceding claims, **characterized in that** at least the support elements (22) adopting their retracted position are pressure free during start-up operation.

16. A roll arrangement in accordance with any one of the preceding claims, **characterized in that** it is designed as a multi-roll calender.

## Revendications

1. Agencement (10) de rouleaux présentant au moins un interstice (12) formé entre un contre-rouleau (16) et un rouleau (14) de réglage de flexion, notamment à ajustement automatique, ledit rouleau (14) de réglage de flexion englobant une enveloppe cylindrique (18) en révolution, une culasse (20) verrouillée en rotation, traversant axialement ladite enveloppe cylindrique (18), ainsi que des éléments d'appui (22) interposés entre l'enveloppe cylindrique (18) et la culasse (20), et pouvant être appliqués contre ladite enveloppe cylindrique (18) ; et les éléments d'appui (22) du rouleau (14) de réglage de flexion, situés côté interstice, étant au moins partiellement réalisés de telle sorte qu'ils puissent prendre une position en retrait vis-à-vis de l'enveloppe cylindrique (18),
**caractérisé par le fait**
**qu'**il comprend un dispositif de commande et/ou de régulation par l'intermédiaire duquel les éléments d'appui (22) du rouleau (14) de réglage de flexion, situés côté interstice, peuvent être activés de façon telle qu'au moins une partie de ces derniers prenne, en mode démarrage dudit rouleau (14) de réglage de flexion, s'opérant à l'état ouvert de l'interstice (12), une position en retrait vis-à-vis de l'enveloppe cylindrique (18).

2. Agencement de rouleaux selon la revendication 1,
**caractérisé par le fait**
**qu'**un entraînement auxiliaire (26), amortisseur de vibrations, est affecté au moins au rouleau (14) de réglage de flexion.

3. Agencement de rouleaux selon la revendication 2,
**caractérisé par le fait**
**que** l'entraînement auxiliaire amortisseur de vibrations englobe un entraînement (26) par courroie.

4. Agencement de rouleaux selon l'une des revendications précédentes,
**caractérisé par le fait**
**que**, durant le mode démarrage, la majeure partie des éléments d'appui (22) situés côté interstice prend une position en retrait vis-à-vis de l'enveloppe cylindrique (18).

5. Agencement de rouleaux selon l'une des revendications précédentes,
**caractérisé par le fait**
**que**, durant le mode démarrage, tous les éléments d'appui (22) situés côté interstice prennent, respectivement, une position en retrait vis-à-vis de l'enveloppe cylindrique (18).

6. Agencement de rouleaux selon l'une des revendications précédentes,
**caractérisé par le fait**
**que** les éléments d'appui (22) situés côté interstice, mis en retrait vis-à-vis de l'enveloppe cylindrique (18) durant le mode démarrage, peuvent être appliqués contre ladite enveloppe cylindrique (18) à l'instant auquel la vitesse de service est atteinte.

7. Agencement de rouleaux selon l'une des revendications précédentes,
**caractérisé par le fait**
**que** les éléments d'appui (22) situés côté interstice, mis en retrait vis-à-vis de l'enveloppe cylindrique (18) durant le mode démarrage, peuvent être appliqués contre ladite enveloppe cylindrique (18) lors de la fermeture de l'interstice (12).

8. Agencement de rouleaux selon l'une des revendications précédentes,
**caractérisé par le fait**
**que** les éléments d'appui (22) considérés, situés côté interstice, sont chargés élastiquement vers leur position rétractée.

9. Agencement de rouleaux selon la revendication 8,
**caractérisé par le fait**
**que** les éléments d'appui (22) considérés, situés côté interstice, sont respectivement contraints par un ressort conique (30) vers leur position rétractée.

10. Agencement de rouleaux selon la revendication 9,
**caractérisé par le fait**
**que** le ressort conique (30) revêt, à l'état contraint, la forme d'une spirale au moins sensiblement aplatie.

11. Agencement de rouleaux selon la revendication 9 ou 10,
**caractérisé par le fait**
**que** le ressort (30), contraignant un élément d'appui (22) considéré, situé côté interstice, vers la position rétractée, est logé à l'intérieur dudit élément d'appui (22) et prend appui, de préférence, contre une butée (32) disposée à une extrémité d'une cheville (34) ou d'une pièce similaire qui s'engage dans ledit élément d'appui (22), et est consignée à demeure sur la culasse (20) par son autre extrémité.

12. Agencement de rouleaux selon l'une des revendications précédentes,
**caractérisé par le fait**
**que** les éléments d'appui (22), situés côté interstice, sont des éléments hydrauliques d'appui lubrifiés hydrodynamiquement et/ou hydrostatiquement ; et
**que** la température de l'huile peut être commandée de façon qu'elle soit plus élevée, durant le mode démarrage, qu'à un stade ultérieur.

13. Agencement de rouleaux selon l'une des revendications précédentes,
**caractérisé par le fait**
**que** les éléments d'appui (22), situés côté interstice, sont des éléments hydrauliques d'appui lubrifiés hydrodynamiquement et/ou hydrostatiquement ; et
**que** le flux volumique de l'huile peut être modifié selon que le rouleau (14) de réglage de flexion se trouve, ou non, en mode démarrage.

14. Agencement de rouleaux selon l'une des revendications précédentes,
**caractérisé par le fait**
**que** les éléments d'appui (22) situés côté interstice peuvent être appliqués contre l'enveloppe cylindrique (18) en étant sollicités par une pression.

15. Agencement de rouleaux selon l'une des revendications précédentes,
**caractérisé par le fait**
**que**, durant le mode démarrage, au moins les éléments d'appui (22) prenant leur position rétractée sont exempts de pression.

16. Agencement de rouleaux selon l'une des revendications précédentes,
**caractérisé par le fait**
**qu'**il est réalisé sous la forme d'une calandre à rouleaux multiples.
